Europäisches Patentamt

European Patent Office

Office européen des brevets

(11) Publication number: **0 483 917 B1**

## EUROPEAN PATENT SPECIFICATION

(45) Date of publication of patent specification: **26.07.95**  (51) Int. Cl.6: **C08L 35/06**, C08L 51/00, C08L 63/02

(21) Application number: **91202768.7**

(22) Date of filing: **24.10.91**

(54) **Polymer composition.**

(30) Priority: **29.10.90 NL 9002345**

(43) Date of publication of application:
**06.05.92 Bulletin 92/19**

(45) Publication of the grant of the patent:
**26.07.95 Bulletin 95/30**

(84) Designated Contracting States:
**AT BE CH DE DK ES FR GB GR IT LI NL SE**

(56) References cited:
**EP-A- 0 148 774**

**PATENT ABSTRACTS OF JAPAN vol. 10, no. 377 (C-392)(2434) 16 December 1986 & JP-A-61 168 630 ( DAICEL CHEM IND LTD ) 30 June 1986**

(73) Proprietor: **DSM N.V.**
**Het Overloon 1**
**NL-6411 TE Heerlen (NL)**

(72) Inventor: **Koning, Cornelis Eme**
**Parkstraat 18**
**NL-6436 EL Schinnen (NL)**
Inventor: **Borggreve, Reinoldus Jozef Maria**
**Frank Smitsstraat 1**
**NL-6336 VG Hulsberg (NL)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

Rank Xerox (UK) Business Services
(3.10/3.09/3.3.3)

## Description

The invention relates to a polymer composition on the basis of a copolymer of an unsaturated carboxylic anhydride and a vinyl aromatic monomer plus a rubber modified with reactive groups.

Such polymer compositions are known from JP-A-60-177069. The polymer composition described in this patent application contains a copolymer of an unsaturated carboxylic anhydride and a vinyl aromatic monomer, and a graft copolymer of an unsaturated rubber and a vinyl aromatic monomer and/or an unsaturated carboxylic acid alkyl ester.

A drawback of these polymer compositions, which possess a good notched impact resistance and a good UV resistance, is their moderate thermostability. Some applications however, for instance in the automotive area, require a combination of a good notched impact resistance and a good thermostability.

The present invention provides a polymer composition which possesses a good notched impact resistance as well as a good thermostability. The polymer composition according to the invention, on the basis of a copolymer of an unsaturated carboxylic anhydride and a vinyl aromatic monomer plus a rubber modified with reactive groups, is characterized in that the polymer composition comprises:

a) a copolymer of a vinyl aromatic monomer and an unsaturated carboxylic anhydride, part of the unsaturated carboxylic anhydride being imidized and/or esterified if required,

b) a graft copolymer consisting of a polymer which has an elasticity modulus < 350 N/mm$^2$ (b1) and has been modified with one or more compounds (b2) which is/are reactive with a phenoxy resin,

c) a phenoxy resin.

It has been found that the polymer composition according to the invention possesses a good notched impact besides a good thermostability. This gives the polymer composition according to the invention a combination of properties which make it suitable for specific applications, for instance in the automotive area.

Preferably a polymer composition is used which comprises:

a) 9.99 - 90 wt.% copolymer of a vinyl aromatic monomer and an unsaturated carboxylic anhydride, part of the unsaturated carboxylic anhydride being imidized and/or esterified if required,

b) 9.99 - 90 wt.% graft copolymer, the graft copolymer consisting of:

b1) 90 - 99.9 wt.% polymer with a modulus of elasticity < 350 N/mm$^2$ modified with,

b2) 0.1 - 10 wt.% of one or more compounds which is/are reactive with a phenoxy resin, the sum of the weight percentages of b1) and b2) being 100,

c) 0.01 - 10 wt.% phenoxy resin,

where the weight percentages of a, b and c are calculated on the sum (a + b + c).

Component a) is a copolymer of a vinyl aromatic monomer and an unsaturated carboxylic anhydride, part of the unsaturated carboxylic anhydride being imidized and/or esterified if required. Mostly 0-90% of the unsaturated carboxylic anhydride will be imidized and/or esterified. The fact that part of the unsaturated carboxylic anhydride is imidized and/or esterified does not essentially affect the present invention.

Examples of vinyl aromatic monomers are styrene, α-methylstyrene, p-methylstyrene, vinyl toluene and monochlorostyrene. Preferably, styrene and/or α-methylstyrene is/are used.

Examples of unsaturated carboxylic anhydrides are maleic anhydride, oxymaleic anhydride, phthalic anhydride, citraconic anhydride, itaconic anhydride and ethoxymaleic anhydride. These carboxylic anhydrides may be imidized and/or esterified. Preferably, maleic anhydride is used.

Both a statistical, non-alternating copolymer and an alternating copolymer of styrene and maleic anhydride are suitable for application in the present invention. A possible process for the preparation of a statistical, non-alternating copolymer of styrene and maleic anhydride is described in Hanson and Zimmermann, Ind. Eng. Chem. Vol. 49, No. 11, November 1957, 1803-1807. According to this known process it is essential to carry out the polymerization continuously and with good mixing in order to obtain statistical, non-alternating copolymers. In addition, the mix of the various quantities of monomer supplied is an important parameter. If these conditions are not fulfilled, an alternating copolymer of styrene and maleic anhydride may be obtained, possibly in combination with a styrene homopolymer.

Component b) contains a polymer having a modulus of elasticity < 350 N/mm$^2$. The molecular structure of this polymer is not essential. It is a requirement, however, for the polymer to be modified with groups that are reactive with a phenoxy resin and for the modulus of elasticity of the unmodified polymer to be lower than 350 N/mm$^2$. The polymer can be chosen for instance from the group of the generally known ethylene-propylene copolymers, chloroprenes, acrylate-ester copolymers, ethylene-vinylacetate copolymers, polyisoprenes, ethene-propene-diene terpolymers, polyisobutene rubbers, very low density polyethene and polybutadienes, but other polymers having a modulus of elasticity < 350 N/mm$^2$ are equally

applicable. Examples of polymers with a modulus of elasticity < 350 N/mm$^2$ are ethene-propene-diene monomer (EPDM) rubber, ethene-propene rubber (EPR), styrene-butadiene rubber (SBR), styrene-butadiene-styrene (SBS) and very low density polyethylene (VLDPE). Preferably, EPDM and/or EPR is/are used.

The polymer should contain one or more groups that are reactive with a phenoxy resin. Examples of such groups are anhydrides, epoxides, isocyanates, oxazolines, amides, acid chlorides, acrylates, esters or carbonates. Examples of compounds that are reactive with phenoxy resin are glycidyl methacrylate, glycidyl ethylmaleate, glycidylacrylate, glycidyl ethylfumarate, methylacrylate, ehtylacrylate, butylacrylate, methylmethacrylate, ethylmethacrylate, butylmethacrylate, hydroxyethylacrylate, hydroxypropylmethacrylate, meta-isopropenyldimethylbenzyl isocyanate, fumaric acid, maleic acid, allylglycidyl ether, N-vinyl caprolactam, vinyl trimethoxysilane, vinyl tris-(2-methoxyethoxy) silane, diethylvinyl phosphonate, di(2-chloroethyl) vinyl phosphonate, maleic anhydride, acrylic acid, acrylamide and hydroxyethylmethacrylate (HEMA). Preferably, glycidyl methacrylate (GMA) and/or maleic anhydride (MA) is/are used.

The phenoxy resins present as component c) in the compositions according to the invention are generally known amorphous polymers, for instance derived from bisphenols and epichlorohydrine. Such polymers are also called 'polyhydroxy ethers'. Phenoxy resins have been summarily described in a general article by W.F. Hale in Encyclopedia of Polymer Science and Engineering, 1st impression, part 10, pp. 111-112. The term 'phenoxy resin' used in the framework of the present invention is meant to include at least all polymers which are included according to said general article. Phenoxy resins are produced at industrial scale and are widely available in the market.

The most commonly used phenoxy resin is derived from 2,2-bis(4-hydroxyphenyl) propane, (bisphenol-A) and epichlorohydrin. Such a resin is preferably used as component c) in the composition according to the invention. Component c) is preferably added in such a quantity that the weight percentage of this component is 0.1-10 relative to the polymer composition as a whole.

Polymer compositions according to the invention can be mixed with one or more (co)polymers. These (co)polymers are for instance acrylonitrile-butadiene-styrene (ABS) rubber, a polycarbonate, a polyamide or a styreneacrylonitrile (SAN) copolymer. The polymer mixture can be prepared in the customary manner by mixing the various components in suitable mixing devices, such as for instance rollers, batch kneaders and extruders or comparable mixing devices. These mixtures likewise offer a combination of a good thermostability and a good notched impact resistance.

The thermostability is measured according to standard ISO-306 (Vicat-B) or according to standard ASTM-D-648-72 (HDT-A), which methods yield results that are well comparable with each other, the difference between them being only 2 to 3°C. The notched impact resistance is measured according to standard ISO-180 (Izod).

Any required additives, such as for instance stabilizers, slip agents, lubricants and/or solvents, colorants, pigments, fillers, UV stabilizers, antistatic agents and the like may also be incorporated in any known manner and at any desired point in the sequence of mixing of the components. It is virtually self-evident that all components may also be mixed together at the same time.

The invention will now be elucidated with the following examples, without being restricted thereto.

## EXAMPLES

### Example I

225 grams styrene maleic anhydride (a copolymer of styrene and maleic anhydride, SMA, containing 28 mol% MA and M$_n$ = 1.1*10$^5$), 75 grams EPDM-GMA and 1.5 grams phenoxy resin (UCAR Fenoxy Resin PKHH®, Union Carbide) were compounded on a Brabender kneader. This compounding took place in 10 minutes with 100 rpm and at 220°C. The blend thus obtained was injection moulded to Izod bars and Vicat-B plates (T-(melt) = 220°C) for a standard Izod test (0.254 mm test) and a Vicat-B test. The measured Izod value was 15 kJ/m$^2$, the Vicat-B value was 135°C.

### Example II

In the same way as described in example I, 220 grams styrene maleic anhydride (SMA, containing 28 mol% MA and M$_n$ = 1. 1*10$^5$) was mixed with 72 grams EPDM-GMA (containing 1.3 wt.% GMA) and 8 grams phenoxy resin (Fenoxy PKHH®, Union Carbide). The blend produced on the Brabender kneader was pressed to plates at 220°C, from which Izod and HDT test bars were milled for a standard Izod test (0.254 mm notch) and an HDT test. The measured Izod value was 9 kJ/m$^2$; the HDT value was 135°C.

### Example III

48 grams EPDM-MA (2.0 wt.% MA) and 12 grams phenoxy resin (Fenoxy PKHH®, Union Carbide) were mixed together for 10 minutes at a temperature of 180°C and an rpm of 100. The product will further be referred to as 'EPDM-g-Fenoxy PKHH'. Next, 45 grams styrene maleic anhydride (SMA, containing 28 mol% MA and $M_n$ = $1.1*10^5$) and 15 grams EPDM-g-Fenoxy PKHH were kneaded together for 10 minutes on a Brabender kneader at a temperature of 220°C and an rpm of 100. From the blend thus obtained plates were pressed at a temperature of 220°C. From these plates, test bars were milled for a standard Izod test (0.254 mm notch) and a standard Vicat-B test. The measured Izod value was 7.3 kJ/m²; the measured Vicat-B value was 138°C.

Comparative experiment A

The Izod value (0.254 mm notch) and the HDT value of pure styrene maleic anhydride (SMA, containing 28 mol% MA and $M_n$ = $1.1*10^5$) were found to be < 1 kJ/m² and 148°C, respectively. Next, example II was repeated, but without mixing in phenoxy resin. For this binary 225/75 SMA/EPDM-GMA blend the Izod value was 6.4 kJ/m² and the HDT value was 135°C.

Comparative experiment B

For a comparison with example III, 48 grams styrene maleic anhydride (SMA, containing 28 mol% MA and $M_n$ = $1.0*10^5$) and 12 grams EPDM-MA were kneaded together on a Brabender kneader at a temperature of 220°C and an rpm of 100. The Izod value (0.254 mm notch) and the Vicat-B value of this blend were found to be < 1 kJ/m² and 138°C respectively.

With these experiments it has been demonstrated that addition of phenoxy resin to a polymer composition consisting of a copolymer of an unsaturated carboxylic anhydride and a vinyl aromatic monomer plus a rubber modified with reactive groups which are reactive with a phenoxy resin to a graft copolymer results in a polymer composition which offers a combination of good notched impact resistance and good thermostability.

**Claims**

1. Polymer composition on the basis of a copolymer of an unsaturated carboxylic anhydride and a vinyl aromatic monomer plus a rubber modified with reactive groups, characterized in that the composition comprises:
   a) a copolymer of a vinyl aromatic monomer and an unsaturated carboxylic anhydride, part of the unsaturated carboxylic anhydride being imidized and/or esterified if required,

   b) a graft copolymer consisting of a polymer which has an elasticity modulus < 350 N/mm² (b1) and has been modified with one or more compounds (b2) which is/are reactive with a phenoxy resin,
   c) a phenoxy resin.

2. Polymer composition according to claim 1, characterized in that it comprises:
   a) 9.99 - 90 wt.% copolymer of a vinyl aromatic monomer and an unsaturated carboxylic anhydride, part of the carboxylic anhydride being imidized and/or esterified if required,
   b) 9.99 - 90 wt.% graft copolymer, the graft copolymer consisting of:
      b1) 90 - 99.9 wt.% polymer with a modulus of elasticity < 350 N/mm² modified with,
      b2) 0.1 - 10 wt.% of one or more compounds which is/are reactive with a phenoxy resin,
      the sum of the weight percentages of b1) and b2) being 100,
   c) 0.01 - 10 wt.% phenoxy resin,
   where the weight percentages of a, b and c are calculated on the sum (a + b + c).

3. A polymer composition according to claim 1 or 2, with the amount of phenoxy resin being added is 0.1-10 wt.%.

4. A polymer composition according to any one of the claims 1-3, glycidylmethacrylate or maleic anhydride being used as component b2).

5. A polymer composition according to any one of the claims 1-4, EPDM and/or EPR being used as component b1).

6. A polymer composition according to any one of the claims 1-5, styrene or α-methylstyrene being used as vinyl aromatic monomer.

7. A polymer composition according to any one of the claims 1-6, the unsaturated carboxylic anhydride used, partly imidized and/or esterified if required, being maleic anhydride.

8. A polymer composition according to any one of the claims 1-7, component c) being a phenoxy resin derived from 2,2-bis(4-hydroxyphenyl) propane, (bisphenol-A) and epichlorohydrin.

9. Mixtures of a polymer composition according to any one of the claims 1-8 with a polycarbonate, a polyamide, ABS or SAN.

10. Objects made in whole or in part from a polymer composition according to any one of the claims 1-9.

## Patentansprüche

1. Polymer-Zusammensetzung auf Basis eines Copolymers eines ungesättigten Carbonsäureanhydrids und eines Vinyl-aromatischen Monomers plus einen Kautschuk, modifiziert mit reaktiven Gruppen, dadurch gekennzeichnet, daß die Zusammensetzung umfaßt:
   a) ein Copolymer eines Vinyl-aromatischen Monomers und eines ungesättigten Carbonsäureanhydrids, wobei ein Teil des ungesättigten Carbonsäureanhydrids imidiert und/oder verestert ist, wenn erforderlich;
   b) ein Pfropf-Copolymer, bestehend aus einem Polymer, das einen Elastizitätsmodul < 350 N/mm$^2$ (b1) aufweist, und mit einer oder mehreren Verbindungen (b2), die mit einem Phenoxy-Harz reagiert/reagieren, modifiziert wurde;
   c) ein Phenoxy-Harz.

2. Polymer-Zusammensetzung nach Anspruch 1, dadurch gekennzeichnet, daß diese umfaßt:
   a) 9,99 bis 90 Masse-% Copolymer eines Vinyl-aromatischen Monomers und eines ungesättigten Carbonsäureanhydrids, wobei ein Teil des Carbonsäureanhydrids imidiert und/oder verestert ist, wenn erforderlich;
   b) 9,99 bis 90 Masse-% Pfropf-Copolymer, wobei das Pfropf-Copolymer besteht aus:
      b1) 90 bis 99,9 Masse-% Polymer mit einem Elastizitätsmodul < 350 N/mm$^2$, modifiziert mit
      b2) 0,1 bis 10 Masse-% einer oder mehrerer Verbindungen, die mit einem Phenoxy-Harz reagiert/reagieren,
         wobei die Summe der Masseprozentsätze von b1) und b2) 100 beträgt;
   c) 0,01 bis 10 Masse-% Phenoxy-Harz,
      wobei die Masseprozentsätze von a, b und c auf die Summe (a + b + c) bezogen sind.

3. Polymer-Zusammensetzung nach Anspruch 1 oder 2, worin die zugesetzte Menge an Phenoxy-Harz 0,1 bis 10 Masse-% beträgt.

4. Polymer-Zusammensetzung nach einem der Ansprüche 1 bis 3, worin Glycidylmethacrylat oder Maleinsäureanhydrid als Komponente b2) verwendet wird.

5. Polymer-Zusammensetzung nach einem der Ansprüche 1 bis 4, worin EPDM und/oder ERP als Komponente b1) verwendet wird/werden.

6. Polymer-Zusammensetzung nach einem der Ansprüche 1 bis 5, worin Styrol oder $\alpha$-Methylstyrol als Vinyl-aromatisches Monomer verwendet wird.

7. Polymer-Zusammensetzung nach einem der Ansprüche 1 bis 6, worin das verwendete, ungesättigte Carbonsäureanhydrid, das teilweise imidiert und/oder verestert ist, wenn erforderlich, Maleinsäureanhydrid ist.

8. Polymer-Zusammensetzung nach einem der Ansprüche 1 bis 7, worin die Komponente c) ein Phenoxy-Harz ist, abgeleitet von 2,2-Bis-(4-hydroxyphenyl)-propan (Bisphenol-A) und Epichlorhydrin.

9. Mischungen einer Polymer-Zusammensetzung nach einer der Ansprüche 1 bis 8 mit einem Polycarbonat, Polyamid, ABS oder SAN.

10. Artikel, welche gänzlich oder teilweise aus einer Polymer-Zusammensetzung nach einem der Ansprüche 1 bis 9 hergestellt sind.

## Revendications

1. Composition de polymère à base d'un copolymère d'un anhydride carboxylique insaturé et d'un monomère vinyl aromatique et d'un caoutchouc modifié par des groupes réactifs, caractérisée en ce que la composition de polymère comprend :
   a) un copolymère d'un monomère vinyl aromatique et d'un anhydride carboxylique insaturé, une partie de l'anhydride carboxylique insaturé étant imidisée et/ou estérifiée si nécessaire,
   b) un copolymère greffé consistant en un polymère qui a un module d'élasticité de moins de 350 N/mm$^2$ (b1) et a été modifié par un ou plusieurs composés (b$^2$) reactifs avec une résine phénoxy,
   c) une résine phénoxy.

2. Composition de polymère selon la revendication 1, caractérisée en ce qu'elle comprend :
   a) de 9,99 à 90 % en poids d'un copolymère d'un monomère vinyl aromatique et d'un anhydride carboxylique insaturé, une partie de l'anhydride carboxylique insaturé étant imidisée et/ou estérifiée si nécessaire,
   b) de 9,99 à 90 % en poids d'un copolymère greffé, ce copolymère greffé étant constitué de :
      b1) 90 à 99,9 % en poids d'un polymère d'un module d'élasticité inférieur à 350 N/mm$^2$, modifié par

b2) 0,1 à 10 % en poids d'un ou plusieurs composés réactifs avec une résine phénoxy, la somme des pourcentages en poids de b1) et b2) étant 100,

    c) de 0,01 à 10 % en poids de résine phénoxy,

où les pourcentages en poids de a, b et c sont calculés par rapport à la somme (a + b + c).

3.   Une composition de polymère selon la revendication 1 ou 2, la quantité de résine phénoxy ajoutée étant de 0,1-10 % en poids.

4.   Une composition de polymère selon l'une quelconque des revendications 1-3, le méthacrylate de glycidyle ou l'anhydride maléique étant utilisé comme constituant b2).

5.   Une composition de polymère selon l'une quelconque des revendications 1-4, EPDM et/ou EPR étant utilisés comme constituant b1).

6.   Une composition de polymère selon l'une quelconque des revendications 1-5, le styrène ou l'alpha-méthylstyrène étant utilisé comme monomère vinyl aromatique.

7.   Une composition de polymère selon l'une quelconque des revendications 1-6, l'anhydride carboxylique insaturé utilisé, partiellement imidisé et/ou estérifié si nécessaire, étant l'anhydride maléique.

8.   Une composition de polymère selon l'une quelconque des revendications 1-7, le constituant c) étant une résine phénoxy dérivée du 2,2-bis(4-hydroxyphényl) propane (bisphénol-A) et de l'épichlorhydrine.

9.   Mélanges d'une composition de polymère selon l'une quelconque des revendications 1-8 avec un polycarbonate, un polyamide, ABS ou SAN.

10.  Objets formés en totalité ou en partie à partir d'une composition de polymère selon l'une quelconque des revendications 1-9.